# EUROPÄISCHE PATENTSCHRIFT

(11) **EP 0 818 494 B1**
(45) Veröffentlichungstag und Bekanntmachung des Hinweises auf die Patenterteilung: **30.12.1998**
(21) Anmeldenummer: 97111719.7
(22) Anmeldetag: 10.07.1997
(51) Int. Cl.: C08G 77/26, C08G 77/388, C08G 77/54

(54) **Permanente Organosiliciumverbindungen, deren Herstellung und Verwendung**
Permanent organosilicon compounds, their preparation and use
Composés organosiliciques permanentes, leur procédé de production et utilisation

(30) Priorität: 11.07.1996 DE 19628017
(43) Veröffentlichungstag der Anmeldung: 14.01.1998
(73) Patentinhaber: Wacker-Chemie GmbH, 81737 München (DE)
(72) Erfinder: Mahr, Günter, Dr., 84489 Burghausen (DE); Dauth, Jochen, Dr., 84489 Burghausen (DE); Deubzer, Bernward, Dr., 84489 Burghausen (DE); Ott, Monika, 84533 Haiming (DE); Gratzl, Petra, 84577 Tuessling (DE); Lautenschlager, Hans, Dr., 84533 Haiming (DE)
(74) Vertreter: Deffner-Lehner, Maria, Dr.

(56) Entgegenhaltungen:
- EP-A- 0 628 591
- US-A- 2 949 434
- US-A- 5 185 445

## Beschreibung

Die Erfindung betrifft Triazingruppen aufweisende Organosiliciumverbindungen, ein Verfahren zu ihrer Herstellung und ihre Verwendung.

Organopolysiloxane mit substituierten 1,3,5-Triazin-Einheiten sind bereits bekannt. Beispielsweise wird in US 2,949,434 (veröffentlicht am 16. August 1960, Bailey, Snyder und Pike, Union Carbide Corp.) eine Reihe von Organopolysiloxanen mit Dichlortriazineinheiten, dargestellt durch Umsetzung von amingruppenhaltigen Organopolysiloxanen mit Cyanurchlorid, beschrieben. Ähnliche strukturen sind in der EP 628591 A2 (offengelegt am 28. Mai 1994, Bernheim, Chrobaczek und Messner, Pfersee Chemie GmbH) aufgezeigt.

Bei der Darstellung von auf amingruppenhaltigen Organopolysiloxanen basierenden Organopolysiloxanen mit Triazingruppen stellen die Aminfunktionen konkurrierende Basen beim Abfangen des entstehenden Chlorwasserstoffs dar. Die resultierenden polaren Ammoniumstrukturen führen einerseits zu hohen Viskositäten des Siliconöls und begünstigen andererseits die Löslichkeit von nicht umgesetzten Cyanurchlorid im Siliconöl, was nicht erwünscht ist. Der gravierendste Nachteil der beschriebenen Organopolysiloxane besteht darin, daß derartige Öle verfahrensbedingt noch Amingruppen enthalten, die bei Lagerung mit Chlortriazinylgruppen reagieren und so zur Vernetzung des Siliconöls bis hin zur Standfestigkeit führen.

In US 3,294,566 (veröffentlicht am 27. Dezember 1966, Cooper, Midland Silicones Ltd.) ist eine Fasermaterialien wasserabstoßende Wirkung verleihende Komposition beschrieben, die Organosilane und/oder Organopolysiloxane mit Amin- oder aliphatischen Hydroxylgruppen und Cyanurchlorid umfaßt.
Dem Fachmann ist bekannt, daß bei der Hydrosilylierung von ungesättigten, aliphatischen Alkoholen in einer Nebenreaktion hydrolysierbare SiO-Alkyl-Verknüpfungen entstehen, die in der Regel nicht erwünscht sind. Zudem sind Hydroxyalkylgruppen an Organopolysiloxanen aufgrund des relativ hohen pKs-Wertes der aliphatischen Alkoholfunktionen schwer durch starke Basen in die korrespondierenden Alkoholate zu überführen, die eine schnelle nucleophile Substitutionsreaktion an Cyanurchlorid unter Salzeliminierung gewährleisten. Schließlich besitzt das in US 3,294,566 verwendete 3-Buten-1-ol einen relativ niedrigen Siede- und Flammpunkt und ist als reizend wirkender Stoff deklariert.

Es bestand die Aufgabe, Organopolysiloxane bereitzustellen, die in einem einfachen Verfahren unter Verwendung leicht zugänglicher Ausgangsstoffe hergestellt werden können und gleichzeitig die oben genannten Nachteile nicht aufweisen. Die Aufgabe wird durch die Erfindung gelöst.

Gegenstand der Erfindung sind Triazingruppen aufweisende Organosiliciumverbindungen mit Einheiten der Formel

AₐR_{b}X_{c}SiO_{(4-a-b-c)/2} (I),

wobei
R gleich oder verschieden ist, ein Wasserstoffatom oder einen einwertigen, substituierten oder unsubstituierten Kohlenwasserstoffrest, vorzugsweise mit 1 bis 26 Kohlenstoffatom(en), bevorzugt 1 bis 18 je Rest bedeutet,
X gleich oder verschieden ist, ein Halogenatom, vorzugsweise ein Chloratom oder ein Rest der Formel -OR¹ ist, wobei R¹ ein Alkylrest, mit vorzugsweise 1 bis 18 Kohlenstoffatom(en), bevorzugt 1 bis 8 je Rest, der durch ein Ethersauerstoffatom substituiert sein kann, bedeutet,
a 0 oder 1, durchschnittlich 0.001 bis 1.0, bevorzugt 0.01-0.5 b 0, 1, 2 oder 3, durchschnittlich 0.0 bis 3.0, bevorzugt 0.5-3.0
c 0, 1, 2 oder 3, durchschnittlich 0.0 bis 3.0, bevorzugt 0.0-2.0 und die
Summe a + b + c ≤ 4, durchschnittlich 0.1 bis 4.0, bevorzugt 0.1-3.5 ist,
und A ein Rest der Formel 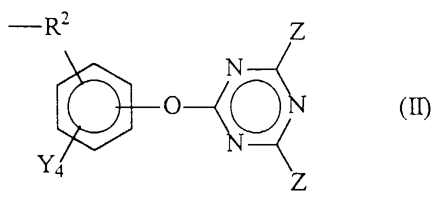 ist, wobei R² einen linearen oder verzweigten, substituierten oder unsubstituierten Alkylenrest, vorzugsweise mit 1 bis 18, bevorzugt 1 bis 12 Kohlenstoffatom(en) bedeutet,
Y gleich oder verschieden ist und ein Wasserstoffatom oder einen iinearen oder verzweigten Alkylrest, vorzugsweise mit 1 bis 12, bevorzugt 1 bis 8 Kohlenstoffatom(en) oder einen Rest der Formel -OR¹ bedeutet, wobei R¹ die oben genannte Bedeutung besitzt,
und Z gleich oder verschieden ist und X, -NR₂, -(O)CR oder -SR bedeutet, wobei X und R die oben genannte Bedeutung haben, mit der Maßgabe, daß pro Polymermolekül mindestens ein Rest A mit mindestens einem Halogenatom, vorzugsweise einem Chloratom enthalten ist.

Die erfindungsgemäßen Organosiliciumverbindungen besitzen vorzugsweise ein durchschnittliches Molekulargewicht von 400 bis 1 000 000 g/mol, bevorzugt 400 bis 150 000 g/mol, und vorzugsweise eine Viskosität von 10 bis 1 000 000 mm²/s bei 25 °C, bevorzugt 20 bis 100 000 mm²/s bei 25 °C.

Gegenstand der Erfindung ist weiterhin ein Verfahren zur Herstellung der Triazingruppen aufweisenden Organosiliciumverbindungen, dadurch gekennzeichnet, daß Organosiliciumverbindungen mit Einheiten der Formel

BₐR_{b}X_{c}SiO_{(4-a-b-c)/2} (III),

wobei B ein Rest der Formel 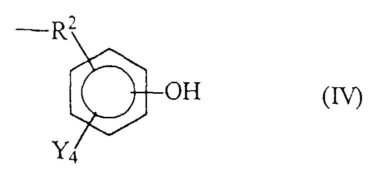 ist und R, R², X, Y, a, b und c die angegebene Bedeutung haben, mit substituiertem oder unsubstituiertem Cyanurhalogenid, vorzugsweise Cyanurchlorid unter Verwendung von Basen polymeranalog umgesetzt werden.

Als Basen werden Amine, wie Triethylamin, Triisooctylamin, Pyridin, Diethylamin, Piperazin und anorganische Basen, wie Kaliumhydroxid, Natriumhydroxid, Caesiumhydroxid, Calciumhydroxid, Natriumcarbonat und Natriumhydrogencarbonat sowie Natriummethanolat verwendet.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für anderweitig substituierte Reste R sind der 3-(3-Methoxy-4-Hydroxy-phenyl)-propyl-Rest und der 3-(2-Hydroxy-phenyl)-propyl-Rest.

Beispiele für Alkylreste R¹ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste R¹, die durch ein Ethersauerstoffatom substituiert sind, sind der Methoxyethyl- und Ethoxyethylrest.

Beispiele für Rest R² sind Alkylenreste der Formel -CH₂CH₂-, -CH₂CH₂CH₂-, -CH(CH₃)CH₂-, -CH₂CH(CH₃)CH₂ und substituierte Alkylenreste der Formel -CH₂CH₂CH₂O-, -CH₂CH_{*2*}CH₂OC(O)-, -CH₂CH₂CH₂NH-, -CH₂CH(CH₃)CH₂O-, -CH₂CH(CH₃)CH₂OC(O)-, -CH₂CH(CH₃)CH₂NH-, CH₂CH₂CH₂S- und -CH₂CH₂CH₂NHC(O)-. Bevorzugt sind die Reste -CH₂CH₂CH₂- und -CH(CH₃)CH₂-.

Bevorzugte Reste für Y sind der Wasserstoffrest und der Methoxyrest.

Bevorzugte Reste für Z sind der Chlorrest und der Methoxyrest.

Beispiele für Reste A sind 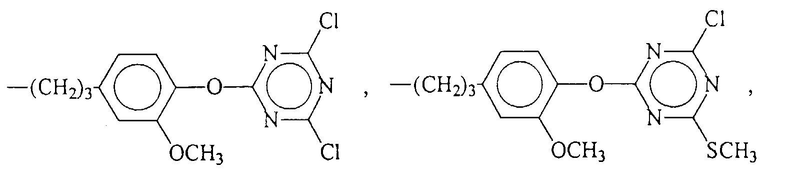 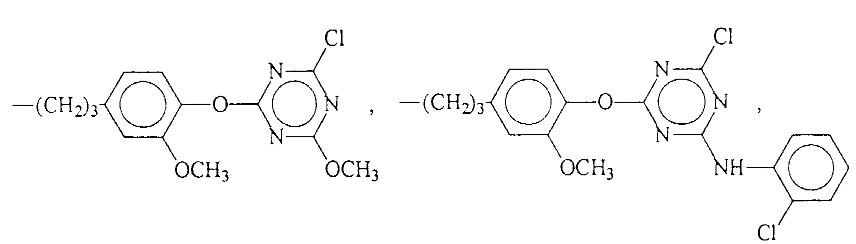 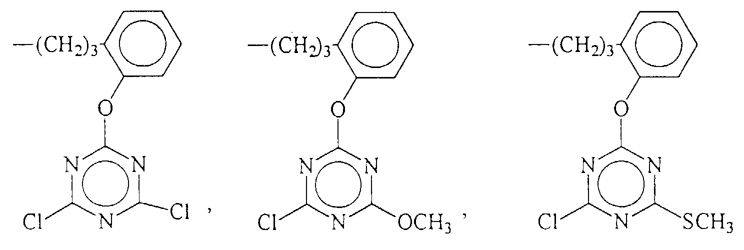 und

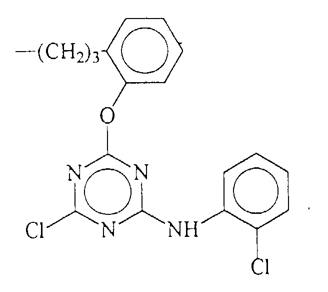

Bevorzugte Reste für A sind

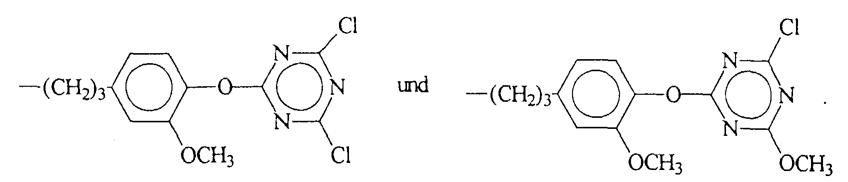

Bevorzugt als Triazingruppen aufweisende Organosiliciumverbindungen sind solche der Formel

A_{d}R_{3-d}SiO(SiR₂O)ₑ(SiRAO)_{f}SiR_{3-d}A_{d} (V),

wobei
A und R die oben angegebene Bedeutung haben,
d 0 oder 1,
e 0 oder eine ganze Zahl von 1 bis 1500, bevorzugt 5 - 1500 und
f 0 oder eine ganze Zahl von 1 bis 200, bevorzugt 1 - 150 ist, mit der Maßgabe, daß pro Polymermolekül mindestens ein Rest A mit mindestens einem Halogenatom, vorzugsweise einem Chloratom enthalten ist.

Für die Darstellung der Vorstufe (III) und der bevorzugten Vorstufen mit Einheiten der Formel

B_{d}R_{3-d}SiO(SiR₂O)ₑ(SiRBO)_{f}SiR_{3-d}B_{d} (VI),

wobei B, R, d, e und f die oben angegebene Bedeutung haben, mit der Maßgabe, daß pro Polymermolekül mindestens ein Rest B enthalten ist,
durch eine Hydrosilylierungsreaktion werden vorzugsweise Organosiliciumverbindungen mit mindestens einem Si-gebundenen Wasserstoffatom je Organopolysiloxan der Formel

HₐR_{b}X_{c}SiO_{(4-a-b-c)/2} (VII),

worin R, X, a, b und c die oben angegebene Bedeutung haben, eingesetzt.

Die Organopolysiloxane mit mindestens einem Si-gebundenen Wasserstoffatom enthalten vorzugsweise mindestens 0.02 Gew.-%, bevorzugt 0.05 bis 1.65 Gew.-% Si-gebundenen Wasserstoff, und ihre durchschnittliche Viskosität beträgt vorzugsweise 5 bis 20 000 mm²/s bei 25 °C, bevorzugt 10 bis 2 000 mm²/s bei 25 °C, besonders bevorzugt 10 bis 1000 mm²/s bei 25 °C.

Bevorzugt werden als Organopolysiloxane mit mindestens einem Si-gebundenen Wasserstoffatom je Molekül solche der Formel

H_{d}R_{3-d}SiO(SiR₂O)ₑ(SiRHO)_{f}SiR_{3-d}H_{d} (VIII),

wobei R, d, e und f die oben angegebene Bedeutung haben, verwendet.

Verfahren zur Herstellung der Organopolysiloxane mit mindestens einem Si-gebundenen Wasserstoffatom je Molekül, auch von solchen der bevorzugten Art, sind allgemein bekannt.

Vorzugsweise werden zur Herstellung der Vorstufe III Hydroxyarylkomponenten der Formel (IVa) verwendet 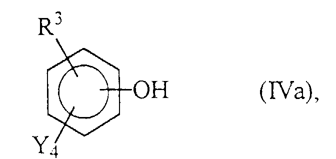 wobei R³ einen linearen oder verzweigten, substituierten oder unsubstituierten Alkenylrest, mit vorzugsweise 1 bis 18, bevorzugt 1 bis 12 Kohlenstoffatom(en) bedeutet.

Beispiele für R³ sind CH₂=CH-, CH₂=CHCH₂-, CH₂=C(CH₃)-, CH₂=C(CH₃)CH₂-, CH₂=CH(CH₂)₉- und substituierte Alkenylreste der Formel CH₂=CHCH₂O-, CH₂=CHCH₂OC(O)-, CH₂=CHCH₂NH-, CH₂=C(CH₃)CH₂O-, CH₂=C(CH₃)CH₂OC(O)-, CH₂=C(CH₃)CH₂NH-, CH₂=CHCH₂S- und CH₂=CHCH₂NHC(O)-.

Eine bevorzugte Hydroxyarylkomponente (IVa) für die Herstellung der Vorstufe (III) durch eine Hydrosilylierungsreaktion ist beispielsweise unter der Bezeichnung Eugenol (4-Allyl-2-methoxyphenol) bei der Fa. Haarmann & Reimer käuflich erwerblich und weist im Vergleich zu ungesättigten Alkoholen, wie z.B. 3-Buten-1-ol, eine geringere Flüchtigkeit, einen höheren Flammpunkt, eine höhere Säurestärke und eine geringere Toxizität auf. Eugenol ist sogar für den Lebensmittelbereich zugelassen.

Ungesättigte Hydroxyarylverbindungen werden bei der Hydrosilylierungsreaktion vorzugsweise in solchen Mengen eingesetzt, daß 1 bis 2 Mol, bevorzugt 1.05 bis 1.50 Mol, organische Verbindung je Grammatom Si-gebundener Wasserstoff in der Organosiliciumverbindung (VI) vorliegt.

Die Vorstufen (III) und (VI) sind bekannt, z.B. aus DE-OS 1 595 789 (offengelegt 12. Februar 1970, Krantz, General Electric Co.).

Als die Anlagerung von Si-gebundenem Wasserstoff an aliphatische Mehrfachbindung fördernde Katalysatoren können auch bei dem erfindungsgemäßen Verfahren vorzugsweise die gleichen Katalysatoren eingesetzt werden, die auch bisher zur Förderung der Anlagerung von Si-gebundenem Wasserstoff an aliphatische Mehrfachbindungen eingesetzt werden konnten. Bei den Katalysatoren handelt es sich vorzugsweise um ein Metall aus der Gruppe der Platinmetalle oder um eine Verbindung oder um einen Komplex aus der Gruppe der Platinmetalle.

Beispiele für solche Katalysatoren sind vorzugsweise metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z. B. PtCl₄, H₂PtCl₆∗6 H₂O, Na₂PtCl₄∗4 H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(y-picolin)-platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, γ-Picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 42 92 434, wie das Umsetzungsprodukt aus in 1-Octen gelöstem Platintetrachlorid mit sec.-Butylamin, oder Ammonium-Platinkomplexe gemäß EP-B 1 10 370, bevorzugt sind [Rh(Cl){P(C₆H₅)₃}₃], H₂PtCl₆·6H₂O, Platin-Olefin-Komplexe und Platin-Vinylsiloxankomplexe.

Der Katalysator wird vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von organischer Verbindung und Organosiliciumverbindung eingesetzt.

Das erfindungsgemäße Verfahren wird vorzugsweise beim Druck der umgebenden Atmosphäre, also bei etwa 1020 hPa (abs.) durchgeführt, es kann aber auch bei höheren oder niedrigeren Drücken durchgeführt werden. Ferner wird das erfindungsgemäße Verfahren vorzugsweise bei einer Temperatur von 30 °C bis 150 °C, bevorzugt 50 °C bis 120 °C, durchgeführt.

Bei dem erfindungsgemäßen Verfahren können vorzugsweise inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Isophoron, Octanisomere, Butylacetat, Isopropanol und Dimethoxyethan.

Von den nach dem erfindungsgemäßen Verfahren hergestellten Hydroxyarylgruppen enthaltenden Organosiliciumverbindungen wird vorzugsweise überschüssige organische Verbindung sowie gegebenenfalls mitverwendetes inertes, organisches Lösungsmittel destillativ entfernt.

Bei dem erfindungsgemäßen Verfahren wird substituiertes oder unsubstituiertes Cyanurhalogenid der Formel 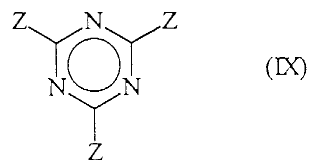 mit den beschriebenen Vorstufen der Formel (III) oder den bevorzugten Vorstufen der Formel (VI) unter Basenzusatz verestert, wobei Z die oben angegebene Bedeutung hat.

Bei dem erfindungsgemäßen Verfahren werden pro Mol Hydroxygruppe vorzugsweise 0.5 bis 6 Mol substituiertes oder unsubstituiertes Cyanurhalogenid der Formel (IX), bevorzugt 0.5 bis 3 Mol substituiertes oder unsubstituiertes Cyanurchlorid und besonders bevorzugt 1 bis 2 Mol substituiertes oder unsubstituiertes Cyanurchlorid verwendet. Die gegebenenfalls bei dem erfindungsgemäßen Verfahren entstehenden Aminhydrochloride bzw. Salze werden durch Filtration entfernt, wobei bei der Filtration sauere, basische oder neutrale Filtrierhilfen verwendet werden können.

Das erfindungsgemäße Verfahren wird vorzugsweise beim Druck der umgebenden Atmosphäre, also bei etwa 1020 hPa (abs.) durchgeführt, es kann aber auch bei höheren oder niedrigeren Drücken durchgeführt werden. Ferner wird das erfindungsgemäße Verfahren vorzugsweise bei einer Temperatur von - 20 °C bis 120 °C, bevorzugt -10 °C bis 100 °C, durchgeführt.

Bei dem erfindungsgemäßen Verfahren können vorzugsweise inerte, organische Lösungsmittel mitverwendet werden, wobei die* Mitverwendung von polaren organischen Lösungsmitteln bevorzugt ist. Beispiele für inerte, organische Lösungsmittel sind Toluol, Xylol, Isophoron, Octanisomere, Butylacetat, Isopropanol, Dimethylethylenglykol, Tehtrahydrofuran und Dioxan.

Die nach dem erfindungsgemäßen Verfahren erhaltenen Triazingruppen aufweisenden Organosiliciumverbindungen können auch nicht veresterte Hydroxyarylgruppen enthalten.

Weiterhin können bei dem erfindungsgemäßen Verfahren nicht veresterte Hydroxygruppen der Organosiliciumverbindungen (III) oder (VI) vorzugsweise durch Carboxylierungsmittel wie Essigsäureanhydrid, Diketen und Dihydropyran weiter umgesetzt werden.

Von den nach dem erfindungsgemäßen Verfahren hergestellten Triazingruppen aufweisenden Organosiliciumverbindungen wird vorzugsweise überschüssige organische Verbindung (IX) sublimativ oder durch Filtration, und überschüssiges Carboxylierungsmittel sowie gegebenenfalls mitverwendetes inertes, organisches Lösungsmittel destillativ entfernt.

Ein weiterer Gegenstand der Erfindung ist ein Verfahren zur Equilibrierung der erfindungsgemäßen Triazingruppen aufweisenden Organosiliciumverbindungen, wobei die Triazingruppen aufweisenden Organosiliciumverbindungen vorzugsweise mit Organopolysiloxanen ausgewählt aus der Gruppe bestehend aus linearen, endständigen Triorganosiloxygruppen aufweisenden Organopolysiloxanen, linearen, endständigen Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel

R₃SiO(SiR₂O)ₘSiR₃ (X),

wobei
R die oben angegebene Bedeutung hat und
m 0 oder eine ganze Zahl im Wert von 1 bis 1 500, bevorzugt 5-1000 ist,
als lineare, endständige Hydroxylgruppen aufweisende Organopolysiloxane solche der Formel

   HO(SiR₂O)ₙH (XI),

   wobei R die oben angegebene Bedeutung hat und n eine ganze Zahl von 1 bis 1500, bevorzugt 5 - 1000 ist, als cyclische Organopolysiloxane solche der Formel

   (SiR₂O)ₒ (XII),

   wobei R die oben angegebene Bedeutung hat und o eine ganze Zahl von 3 bis 12, bevorzugt 3 - 8 ist, und als Mischpolymerisate solche aus Einheiten der Formel

   R₂SiO und RSiO_{3/2} (XIII),

   wobei R die oben angegebene Bedeutung hat, eingesetzt.

Die Mengenverhältnisse der bei der gegebenenfalls durchgeführten Equilibrierung eingesetzten Organopolysiloxane und Triazingruppen aufweisenden Organopolysiloxane werden lediglich durch den gewünschten Anteil der Triazingruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise saure Katalysatoren, welche die Equilibrierung fördern, eingesetzt. Beispiele für solche Katalysatoren sind Schwefelsäure, Phosphorsäure, Trifluormethansulfonsäure, Phosphornitridchlorid und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride.

Phosphornitridchloride werden vorzugsweise in Mengen von 5 bis 1000 Gew.-ppm (Gewichtsteile je Million Gewichtsteile), besonders bevorzugt 50 bis 200 Gew.-ppm, jeweils bezogen auf das Gesamtgewicht der eingesetzten Organosiliciumverbindungen, verwendet. Die Verwendung basischer Equilibrierungskatalysatoren ist zwar möglich, jedoch nicht bevorzugt.

Die gegebenenfalls durchgeführte Equilibrierung wird vorzugsweise bei 80 °C bis 150 °C, bevorzugt 80°C bis 140°C und vorzugsweise beim Druck der umgebenden Atmosphäre, also etwa bei 1020 hPa (abs.) durchgeführt. Falls erwünscht, können auch höhere oder niedrigere Drücke angewendet werden. Das Equilibrieren wird vorzugsweise in 5 bis 20 Gew.-% bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des beim Equilibrieren erhaltenen Gemisches kann der Katalysator unwirksam gemacht werden.

Das erfindungsgemäße Verfahren kann vorzugsweise absatzweise, halbkontinuierlich oder vollkontinuierlich durchgeführt werden.

Die erfindungsgemäßen Triazingruppen aufweisenden Organosiliciumverbindungen zeichnen sich durch ihre einfache Darstellungsweise, durch ihren geringen SiOC-Gehalt und ihre Viskositätsstabilität aus.

Ein weiterer Gegenstand der Erfindung ist ein Verfahren zur Behandlung von textilen Geweben und Ledern, dadurch gekennzeichnet, daß erfindungsgemäße Triazingruppen aufweisende Organosiliciumverbindungen verwendet werden.

Die erfindungsgemäßen Organosiliciumverbindungen besitzen einen guten Weichgriff, eine geringe Vergilbungsneigung und ermöglichen die permanente Ausrüstung von Substraten.
Die genannten erfindungsgemäßen Organosiliciumverbindungen dienen vorzugsweise der Behandlung von textilen Flächengebilden, wie z.B. Geweben, Maschenwaren oder Vliesen. Die Permanenz der Effekte gegenüber Waschprozessen ist insbesondere im Fall von Textilien ausgezeichnet, welche Cellulosefasern oder Polyamidfasern enthalten oder aus ihnen bestehen. Die Erfindung betrifft ferner Textilfaserpräparationen und Lederbehandlung.

### Beispiele:

### Beispiel 1:

Ein Gemisch aus 88.5 g (0.539 mol) Eugenol, 1000 g (0.490 mol SiH) eines α,ω-Hydrogen-Polydimethylsiloxans der Viskosität 67 mm²/s, 2.2 g (0.021 mol) Natriumcarbonat und 3.651 ml (10 ppm Platin) einer 1 %igen Lösung von Hexachloroplatinsäure in Isopropanol wurde unter Stickstoff inertisierung auf 30 °C aufgeheizt. Nach erfolgter exothermer Reaktion wurde das Reaktionsgemisch 1 Stunde lang bei einer Temperatur von 50 °C gerührt. Danach wurden flüchtige Bestandteile bei 120°C und einem Vakuum von ca. 5 mbar entfernt. Nach Abkühlung und anschließender Filtration erhielt man ein bräunliches, klares Öl mit einer Viskosität von 106 mm²/s und einer Hydroxylzahl von 27.41 mg KOH/g. Ausbeute: 89.-0 % (der Theorie) (Vorstufe I)

### Beispiel 2:

Ein Gemisch aus 108.4 g (0.660 mol) Eugenol, 2000 g (0.600 mol SiH) eines α,ω-Hydrogen-Polydimethylsiloxans der Viskosität 170 mm²/s und 7.026 ml (10 ppm Platin) einer 1 %igen Lösung von Hexachloroplatinsäure in Isopropanol wurde unter Stickstoffinertisierung auf 30 °C aufgeheizt. Nach erfolgter exothermer Reaktion wurde das Reaktionsgemisch 2 Stunden lang bei einer Temperatur von 50 °C gerührt. Danach wurden flüchtige Bestandteile bei 120°C und einem Vakuum von ca. 5 mbar entfernt. Nach Abkühlung und anschließender Filtration erhielt man ein bräunliches, klares Öl mit einer Viskosität von 200 mm²/s und einer Hydroxylzahl von 17.06 mg KOH/g. Ausbeute: 93.0 % (der Theorie) (Vorstufe II)

### Beispiel 3:

Eine Lösung von 346.9 g (2.113 mol) Eugenol in 409.9 g Isopropanol wurde mit 8.25 g (0.078 mol) Natriumcarbonat versetzt und unter Stickstoff inertisierung auf 80°C aufgeheizt. Bei dieser Temperatur wurden 13.013 ml (10 ppm Platin) einer 1 %igen Lösung von Hexachloroplatinsäure in Isopropanol zugegeben. Anschließend wurden im Verlauf von 65 Minuten 3750 g (1.838 mol SiH) eines Polydimethylsiloxans der Viskosität 69 mm²/s mit seitenständigen Hydrogengruppen zudosiert und das Reaktionsgemisch 1 Stunde lang bei einer Temperatur von 90°C gerührt. Danach wurden flüchtige Bestandteile bei 120°C und einem Vakuum von ca. 5 mbar entfernt. Nach Filtration und anschließender Kurzwegdestillation erhielt man ein bräunliches, klares Öl mit einer Viskosität von 309 mm²/s und einer Hydroxylzahl von 20.55 mg KOH/g. Ausbeute: 79.7 % (der Theorie) (Vorstufe III)

### Beispiel 4:

Ein Gemisch aus 27.1 g (0.202 mol) 2-Allylphenol, 500 g (0.185 mol SiH) eines Polydimethylsiloxans mit seitenständigen Hydrogengruppen und 1.760 g (10 ppm) einer 1 %igen Lösung von Hexachloroplatinsäure in Isopropanol wurde unter Stickstoffinertisierung auf 50 °C aufgeheizt. Nach erfolgter exothermer Reaktion wurde das Reaktionsgemisch 1 Stunde lang bei einer Temperatur von 65 °C gerührt. Danach wurden flüchtige Bestandteile bei 120°C und einem Vakuum von ca. 5 mbar entfernt. Nach Abkühlung und anschließender Filtration erhielt man ein braunes, klares Öl mit einer Viskosität von 796 mm²/s und einer Hydroxylzahl von 16.66 mg KOH/g. Ausbeute: 81.0 % (der Theorie) (Vorstufe IV)

### Beispiel 5:

200.0 g (0.098 mol Hydroxygruppen) Vorstufe I wurden mit 17.6 g einer 30 %igen Lösung von NaOCH₃ in MeOH (0.098 mol NaOCH₃) versetzt und 1 Stunde gerührt. Unter Stickstoffinertisierung wurde diese Mischung im Verlauf von 2 Stunden zu einer Lösung von 18.1 (0.098 mol) Cyanurchlorid in 108.4 g Dimethoxyethan zudosiert. Anschließend wurde das Reaktionsgemisch 1 Stunde lang bei einer Temperatur von 60 °C gerührt. Nach Abkühlung und Filtration wurden alle flüchtigen Bestandteile bei einer Temperatur von bis zu 140 °C und einem Vakuum von ca. 5 mbar entfernt. Nach abschließender Filtration erhielt man ein schwach grünliches, klares Öl mit einer Viskosität von 284 mm²/s. Ausbeute: 47.6 % (der Theorie)

### Beispiel 6:

Unter Stickstoffdurchfluß wurde eine Mischung aus 1000 g (0.304 mol Hydroxygruppen) Vorstufe II, 52.0 g einer 30 %igen Lösung von NaOCH₃ in MeOH (0.289 mol NaOCH₃) und 105.2 g Dimethoxyethan 1 Stunde lang bei einer Temperatur von 25 °C, und anschließend 1 Stunde lang bei einer Temperatur von 60 °C gerührt. Dabei wurde der Großteil des Methanols im Gemisch mit Dimethoxyethan destillativ entfernt. Nach erneuter Zugabe von 105.2 g Dimethoxyethan wurde diese Mischung im Verlauf von 1.5 Stunden zu einer Lösung von 56.1 g (0.304 mol) Cyanurchlorid in 224.4 g Dimethoxyethan zudosiert. Anschließend wurde das Reaktionsgemisch 1 Stunde lang bei einer Temperatur von 60 °C und dann unter Abkühlung 2 Stunden gerührt. Danach wurden alle flüchtigen Bestandteile bei einer Temperatur von 140 °C und einem Vakuum von ca. 5 mbar entfernt. Nach abschließender Filtration erhielt man ein schwach grünliches, leicht trübes Öl mit einer Viskosität von 271 mm²/s. Ausbeute: 79.8 % (der Theorie)

### Beispiel 7:

Unter Stickstoffdurchfluß wurde eine Mischung aus 250 g (0.092 mol Hydroxygruppen) Vorstufe III, 15.6 g einer 30 %igen Lösung von NaOCH₃ in MeOH (0.087 mol NaOCH₃) und 26.6 g Dimethoxyethan 1 Stunde lang bei einer Temperatur von 25 °C, und anschließend 1 Stunde lang bei einer Temperatur von 60 °C gerührt. Dabei wurde der Großteil des Methanols im Gemisch mit Dimethoxyethan destillativ entfernt. Nach erneuter Zugabe von 26.6 g Dimethoxyethan wurde diese Mischung im Verlauf von 0.4 Stunden zu einer Lösung von 16.9 g (0.092 mol) Cyanurchlorid in 67.7 g Dimethoxyethan zudosiert. Anschließend wurde das Reaktionsgemisch 1 Stunde lang bei einer Temperatur von 60 °C und dann unter Abkühlung 2 Stunden gerührt. Danach wurden alle flüchtigen Bestandteile bei einer Temperatur von 140 °C und einem Vakuum von ca. 5 mbar entfernt. Nach abschließender Filtration erhielt man ein schwach grünliches, klares Öl mit einer Viskosität von 278 mm²/s. Ausbeute: 85.8 % (der Theorie) (erfindungsgemäßes Endprodukt I)

### Beispiel 8:

Unter Stickstoffdurchfluß wurde eine Mischung aus 250 g (0.074 mol Hydroxygruppen) Vorstufe IV, 12.6 g einer 30 % igen Lösung von NaOCH₃ in MeOH (0.070 mol NaOCH₃) und 26.3 g Dimethoxyethan 1 Stunde lang bei einer Temperatur von 25 °C, und anschließend 1 Stunde lang bei einer Temperatur von 60 °C gerührt. Dabei wurde der Großteil des Methanols im Gemisch mit Dimethoxyethan destillativ entfernt. Nach erneuter Zugabe von 26.3 g Dimethoxyethan wurde diese Mischung im Verlauf von 0.4 Stunden zu einer Lösung von 13.6 g (0.074 mol) Cyanurchlorid in 54.4 g Dimethoxyethan zudosiert. Anschließend wurde das Reaktionsgemisch 1 Stunde lang bei einer Temperatur von 60°C und dann unter Abkühlung 2 Stunden gerührt. Danach wurden alle flüchtigen Bestandteile bei einer Temperatur von 140°C und einem Vakuum von ca. 5 mbar entfernt. Nach abschließender Filtration erhielt man ein schwach grünliches, klares Öl mit einer Viskosität von 780 mm²/s. Ausbeute: 69.2% (der Theorie)

### Vergleichsbeispiel:

Das nachstehende Beispiel belegt die Viskositätsstabilität der erfindungsgemäßen Triazingruppen aufweisenden Organosiliciumverbindungen im Vergleich zu Triazingruppen aufweisenden Organosiliciumverbindungen, die aus aminofunktionellen Organopolysiloxanen nach US 2,949,434 hergestellt werden. Das in diesem Beispiel verwendete aminofunktionelle Organopolysiloxan ist bzgl. seiner Kettenlänge und seiner Funktionsdichte identisch mit dem hydroxyarylfunktionellen Organopolysiloxan Vorstufe III.

Bei einer Temperatur von 50 °C wurde unter Stickstoffdurchfluß eine Mischung aus 250 g (0.115 mol Amingruppen) eines Polydimethylsiloxans der Viskosität 146 mm²/s mit seitenständigen Amingruppen, 250 ml THF (Tetrahydrofuran) und 25.81 g einer 25 %igen Lösung von KOH in Methanol (0.115 mol KOH) zu einer Lösung von 21.21 g ( 0.115 mol) Cyanurchlorid in 70 ml THF zudosiert. Anschließend wurde das Reaktionsgemisch drei Stunden lang bei einer Temperatur von 63 °C gerührt. Nach Filtration wurden alle flüchtigen Bestandteile bei einer Temperatur von 50 °C und einem Vakuum von ca. 5 mbar entfernt. Nach abschließender Filtration erhielt man ein farbloses, klares Öl mit einer Viskosität von 175 mm²/s. Ausbeute: 79.1 % (der Theorie) (Endprodukt II)

**Tabelle 1**

| Vergleich der Viskositäten und des Aussehens von dem erfindungsgemäßen Endprodukt I und Endprodukt II bei Lagerung | | |
|---|---|---|
| Lagerung [Tage] | Viskosität [mm²/s] | |
| | Endprodukt I | Endprodukt II |
| 0 | 278 | 175 |
| 7 | 287 | 387 |
| 15 | 283 | 2950 |
| 23 | 302 | 3300 |
| 40 | 314 | Vergelung |
| 50 | 305 | - |
| 70 | 343 | - |
| Aussehen nach 70 Tagen | klar | weiß, trüb |

## Patentansprüche

1. Triazingruppen aufweisende Organosiliciumverbindungen mit Einheiten der Formel
AₐR_{b}X_{c}SiO_{(4-a-b-c)/2} (I),
wobei
R gleich oder verschieden ist, ein Wasserstoffatom oder einen einwertigen, substituierten oder unsubstituierten Kohlenwasserstoffrest bedeutet,
X gleich oder verschieden ist, ein Halogenatom oder ein Rest der Formel -OR¹ ist, wobei R¹ ein Alkylrest, der durch ein Ethersauerstoffatom substituiert sein kann, bedeutet,
a 0 oder 1, durchschnittlich 0.01 bis 1.0
b 0, 1, 2 oder 3, durchschnittlich 0.0 bis 3.0
c 0, 1, 2 oder 3, durchschnittlich 0.0 bis 3.0 und die Summe a + b + c ≤ 4 , durchschnittlich 0.1 bis 4.0 ist,
und A ein Rest der Formel 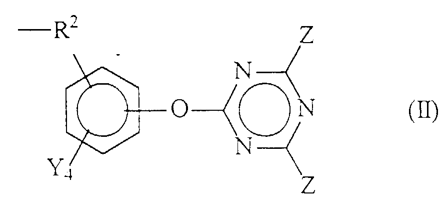 ist, wobei R² einen linearen oder verzweigten, substituierten oder unsubstituierten Alkylenrest bedeutet,
Y gleich oder verschieden ist und ein Wasserstoffatom oder einen linearen oder verzweigten Alkylrest oder einen Rest der Formel -OR¹ bedeutet, wobei R¹ die oben genannte Bedeutung besitzt,
und Z gleich oder verschieden ist und X, -NR₂, -(O)CR oder -SR bedeutet, wobei X und R die oben genannte Bedeutung haben, mit der Maßgabe, daß pro Polymermolekül mindestens ein Rest A mit mindestens einem Halogenatom enthalten ist.

2. Triazingruppen aufweisende Organosiliciumverbindungen gemäß Anspruch 1, dadurch gekennzeichnet, daß A Reste der Formel sind 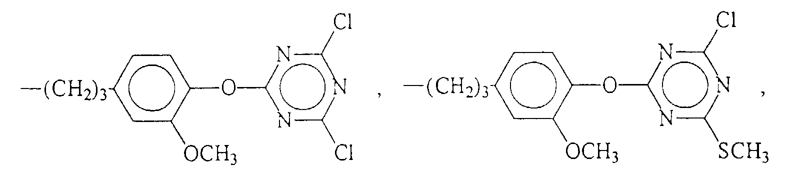 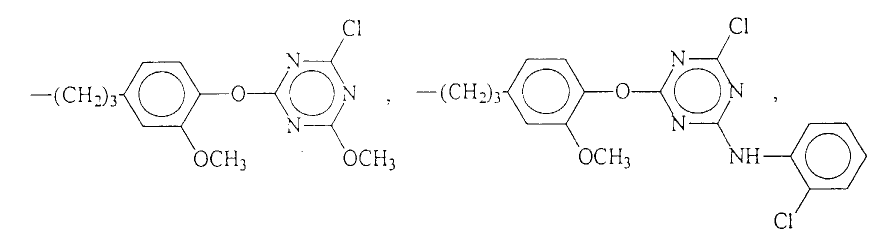 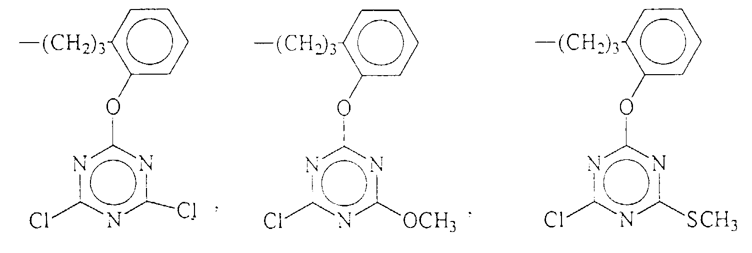 und

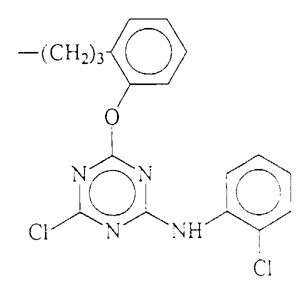

3. Triazingruppen aufweisende Organosiliciumverbindungen nach Anspruch 1 oder 2, dadurch gekennzeichnet, daß es sich um solche der Formel
A_{d}R_{3-d}SiO(SiR₂O)ₑ(SiRAO)_{f}SiR_{3-d}A_{d} (V),
wobei
A und R die oben angegebene Bedeutung haben,
d 0 oder 1,
e 0 oder eine ganze Zahl von 1 bis 1500 und
f 0 oder eine ganze Zahl von 1 bis 200 ist,
mit der Maßgabe, daß pro Polymermolekül mindestens ein Rest A mit mindestens einem Halogenatom enthalten ist, handelt.

4. Verfahren zur Herstellung der Triazingruppen aufweisenden Organosiliciumverbindungen nach einem der Ansprüche 1 bis 3, dadurch gekennzeichnet, daß Organosiliciumverbindungen mit Einheiten der Formel
BₐR_{b}X_{c}SiO_{(4-a-b-c)/2} (III),
wobei B ein Rest der Formel (IV) 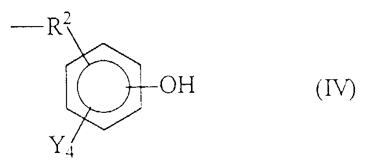 ist und R, R², X, Y, a, b und c die angegebene Bedeutung haben, mit gegebenfalls substituiertem Cyanurhalogenid unter Verwendung von Basen polymeranalog umgesetzt werden.

5. Verfahren zur Herstellung der Triazingruppen aufweisenden Organosiliciumverbindungen nach Anspruch 4, dadurch gekennzeichnet, daß als Vorstufe (III) Einheiten der Formel
B_{d}R_{3-d}SiO(SiR₂O)ₑ(SiRBO)_{f}SiR_{3-d}B_{d} (VI),
wobei B, R, d, e und f die oben angegebene Bedeutung haben, mit der Maßgabe, daß pro Polymermolekül mindestens ein Rest B enthalten ist, verwendet werden.

6. Verfahren zur Herstellung der Triazingruppen aufweisenden Organosiliciumverbindungen nach Anspruch 4 oder 5, dadurch gekennzeichnet, daß die Vorstufen (III) oder (VI) durch eine Hydrosilylierungsreaktion mit Organosiliciumverbindungen mit mindestens einem Si-gebundenen Wasserstoffatom je Organopolysiloxan der Formel
HₐR_{b}X_{c}SiO_{(4-a-b-c)/2} (VII),
worin R, X, a, b und c die oben angegebene Bedeutung haben, und einer ungesättigten Hydroxyarylverbindung hergestellt werden.

7. Verfahren zur Herstellung der Triazingruppen aufweisenden Organosiliciumverbindungen nach Anspruch 6, dadurch gekennzeichnet, daß als Organosiliciumverbindungen mit mindestens einem Si-gebundenen Wasserstoffatom je Organopolysiloxan solche der Formel
H_{d}R_{3-d}SiO(SiR₂O)ₑ(SiRHO)_{f}SiR_{3-d}H_{d} (VIII),
wobei R, d, e und f die oben angegebene Bedeutung haben, verwendet werden.

8. Equilibrierung der Triazingruppen aufweisenden Organosiliciumverbindungen nach einem oder mehren der Ansprüche 1 bis 3 oder hergestellt nach einem oder mehreren der Ansprüche 4 bis 7, dadurch gekennzeichnet, daß die Triazingruppen aufweisenden Organosiliciumverbindungen mit Organopolysiloxanen ausgewählt aus der Gruppe bestehend aus linearen, endständigen Triorganosiloxygruppen aufweisenden Organopolysiloxanen, linearen, endständigen Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

9. Equilibrierung der Triazingruppen aufweisenden Organosiliciumverbindungen nach Anspruch 1 als lineare, endständige Triorganosiloxygruppen aufweisende Organopolysiloxane solche der Formel
R₃SiO(SiR₂O)ₘSiR₃ (X),
wobei R die oben angegebene Bedeutung hat und m 0 oder eine ganze Zahl im Wert von 1 bis 1 500 ist, als lineare, endständige Hydroxylgruppen aufweisende Organopolysiloxane solche der Formel
HO(SiR₂O)ₙH (XI),
wobei R die oben angegebene Bedeutung hat und n eine ganze Zahl von 1 bis 1500 ist, als cyclische Organopolysiloxane solche der Formel
(SiR₂O)ₒ (XII),
wobei R die oben angegebene Bedeutung hat und o eine ganze Zahl von 3 bis 12 ist, und als Mischpolymerisate solche aus Einheiten der Formel
R₂SiO und RSiO_{3/2} (XIII),
wobei R die oben angegebene Bedeutung hat, eingesetzt werden.

10. Verfahren zur Behandlung von textilen Geweben und Ledern, dadurch gekennzeichnet, daß Triazingruppen aufweisende Organosiliciumverbindungen nach einem oder mehren der Ansprüche 1 bis 3 oder hergestellt nach einem oder mehreren der Ansprüche 4 bis 7 oder equilibriert nach den Ansprüchen 8 oder 9 verwendet werden.

## Claims

1. Triazine-containing organosilicon compounds having units of the formula
AₐR_{b}X_{c}SiO_{(4-a-b-c)/2} (I),
where R is identical or different and denotes a hydrogen atom or a monovalent substituted or unsubstituted hydrocarbon radical,
X is identical or different and is a halogen atom or a radical of the -formula -OR¹, where R¹ denotes an alkyl radical and which may be substituted by an ether oxygen atom,
a is 0 or 1, averaging 0.01 to 1.0
b is 0, 1, 2 or 3, averaging 0.0 to 3.0
c is 0, 1, 2 or 3, averaging 0.0 to 3.0, and the
sum a + b + c ≤ 4, averaging 0.1 to 4.0,
and A is a radical of the formula 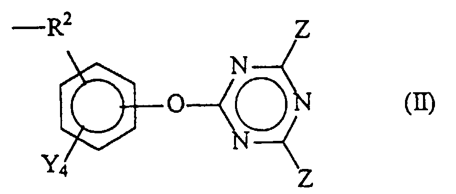 where R² is an unbranched or branched, substituted or unsubstituted alkylene radical,
Y is identical or different and denotes a hydrogen atom or an unbranched or branched alkyl radical, or denotes a radical of the formula -OR¹, where R¹ has the meaning given above,
and Z is identical or different and denotes X, -NR₂, -(O)CR or -SR, where X and R have the meanings given above with the proviso that at least one radical A containing at least one halogen atom is present per polymer molecule.

2. Triazine-containing organosilicon compounds according to Claim 1, characterized in that A are radicals of the formulae 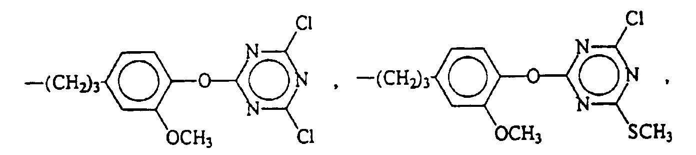 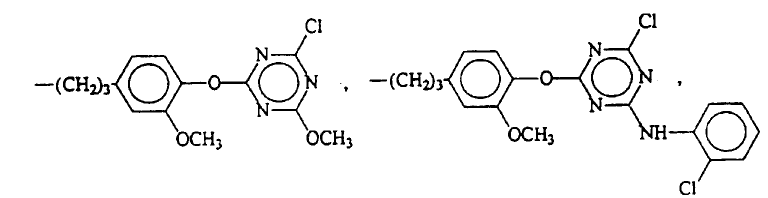 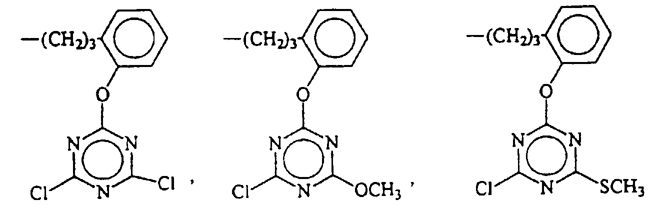 and

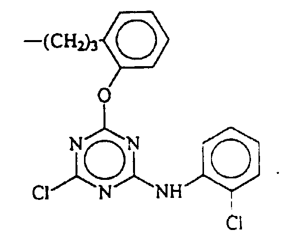

3. Triazine-containing organosilicon compounds according to Claim 1 or 2, characterized in that it is one of the formula
A_{d}R_{3-d}SiO(SiR₂O)ₑ(SiRAO)_{f}SiR_{3-d}A_{d} (V),
where A and R have the meanings specified above,
d is 0 or 1,
e is 0 or an integer from 1 to 1500 and
f is 0 or an integer from 1 to 200,
with the proviso that at least one radical A having at least one halogen atom is present per polymer molecule.

4. Process for preparing the triazine-containing organosilicon compounds according to one of Claims 1 to 3, characterized in that organosilicon compounds having units of the formula
BₐR_{b}X_{c}SiO_{(4-a-b-c)/2} (III),
where B is a radical of the formula (IV) 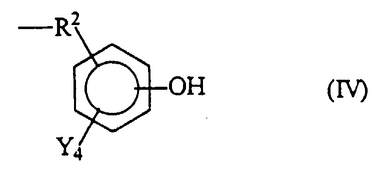 and R, R², X, Y, a, b and c have the specified meanings, are reacted in a polymer-analogous manner with substituted or unsubstituted cyanuric halide, using bases.

5. Process for preparing the triazine-containing organosilicon compounds according to Claim 4, characterized in that as precursor (III) use is made of units of formula
B_{d}R_{3-d}SiO(SiR₂O)ₑ(SiRBO)_{f}SiR_{3-d}B_{d} (VI),
where B, R, d, e and f have the meanings specified above, with the proviso that at least one radical B is present per polymer molecule.

6. Process for preparing the triazine-containing organosilicon compounds according to Claim 4 or 5, characterized in that the precursors (III) or (VI) are prepared by a hydrosilylation reaction with organosilicon compounds having at least one Si-bonded hydrogen atom per organopolysiloxane of the formula
HₐR_{b}X_{c}SiO_{(4-a-b-c)/2} (VII),
where R, X, a, b and c have the meanings specified above, and an unsaturated hydroxyaryl compound.

7. Process for preparing the triazine-containing organosilicon compounds according to Claim 6, characterized in that, as organosilicon compound having at least one Si-bonded hydrogen atom per organopolysiloxane, use is made of one of the formula
H_{d}R_{3-d}SiO(SiR₂O)ₑ(SiRHO)_{f}SiR_{3-d}H_{d} (VIII),
where R, d, e and f have the meanings specified above.

8. Equilibration of the triazine-containing organosilicon compounds according to one or more of Claims 1 to 3 or prepared by one or more of Claims 4 to 7, characterized in that the triazine-containing organosilicon compounds are equilibrated with organopolysiloxanes selected from the group consisting of unbranched organopolysiloxanes having terminal triorganosiloxy groups, unbranched organopolysiloxanes having terminal hydroxyl groups, cyclic organopolysiloxanes and mixed polymers of diorganosiloxane and monoorganosiloxane units.

9. Equilibration of the triazine-containing organosilicon compounds according to Claim 1 characterized in that as unbranched organopolysiloxanes use is made of those of the formula
R₃SiO(SiR₂O)ₘSiR₃, (X),
where R has the meaning specified above and m is 0 or an integer in the range from 1 to 1500, as unbranched organopolysiloxanes having terminal hydroxyl groups, use is made of those of the formula
HO (SiR₂O)ₙH (XI),
where R has the meaning specified above and n is an integer from 1 to 1500, as cyclic organopolysiloxanes, use is made of those of the formula
(SiR₂O)ₒ (XII),
where R has the meaning specified above and o is an integer from 3 to 12, and as mixed polymers, use is made of those of units of the formula
R₂SiO and RSiO_{3/2} (XIII),
where R has the meaning specified above.

10. Process for treating textile fabrics and leathers, characterized in that use is made of triazine-containing organosilicon compounds according to one or more of Claims 1 to 3 or prepared by one or more of Claims 4 to 7 or equilibrated according to Claims 8 or 9.

## Revendications

1. Composés organosiliciés renfermant des groupes triazine ayant des motifs de formule
AₐR_{b}X_{c}SiO_{(4-a-b-c)/2} (I)
dans laquelle
R est identique ou différent, et représente un atome d'hydrogène ou un radical hydrocarboné monovalent, substitué ou non substitué,
X est identique ou différent, et représente un atome d'halogène ou un radical de formule -OR¹ dans laquelle R¹ représente un radical alkyle qui peut être substitué par un atome d'oxygène d'éther,
a vaut 0 ou 1, en moyenne de 0,01 à 1,0
b vaut 0, 1, 2 ou 3, en moyenne de 0,0 à 3,0
c vaut 0, 1, 2 ou 3, en moyenne de 0,0 à 3,0, et la somme a + b + c ≤ 4 en moyenne de 0,1 à 4,0,
et A est un radical de formule 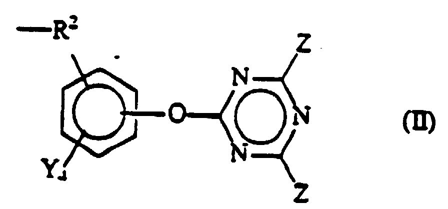 dans laquelle R² représente un radical alkylène linéaire ou ramifié, substitué ou non substitué,
Y est identique ou différent et représente un atome d'hydrogène ou un radical alkyle linéaire ou ramifié ou un radical de formule -OR¹, dans laquelle R¹ a la signification mentionnée ci-dessus,
et Z est identique ou différent et représente X, -NR₂, -(O)CR ou -SR, X et R ayant la signification mentionnée ci-dessus, à condition qu'au moins un radical A ayant au moins un atome d'halogène soit présent par molécule polymère.

2. Composés organosiliciés renfermant des groupes triazine selon la revendication 1, caractérisés en ce que les A sont des radicaux de formules 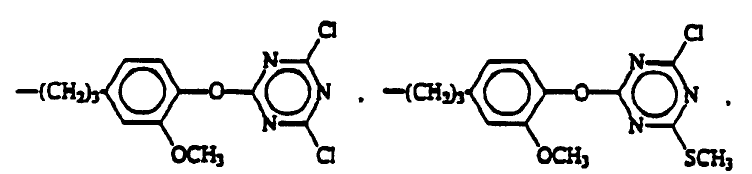 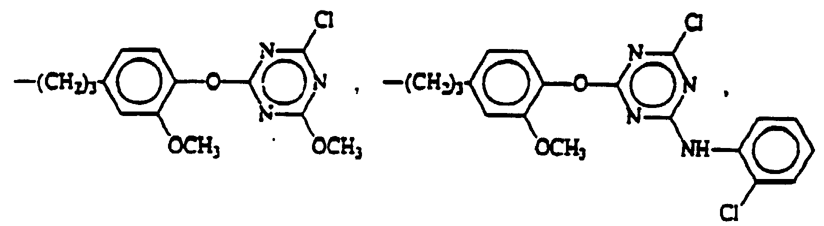 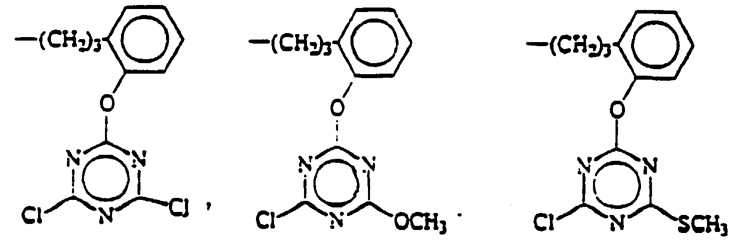 et

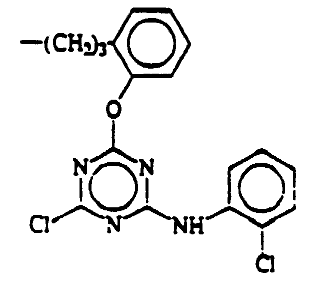

3. Composés organosiliciés renfermant des groupes triazine selon la revendication 1 ou 2, caractérisés en ce qu'ils sont des composés de formule
A_{d}R_{3-d}SiO (SiR₂O)ₑ(SiRAO)_{f}SiR_{3-d}A_{d} (V),
dans laquelle
A et R ont la signification donnée ci-dessus,
d vaut 0 ou 1,
e vaut 0 ou est un entier allant de 1 à 1 500 et
f vaut 0 ou est un entier allant de 1 à 200,
à condition qu'au moins un radical A ayant au moins un atome d'halogène soit présent par molécule polymère.

4. Procédé de préparation des composés organosiliciés renfermant des groupes triazine selon l'une quelconque des revendications 1 à 3, caractérisé en ce que l'on fait réagir, de manière analogue à un polymère, des composés organosiliciés ayant des motifs de formule
BₐR_{b}X_{c}SiO_{(4-a-b-c)/2} (III),
dans laquelle B est un radical de formule (IV) 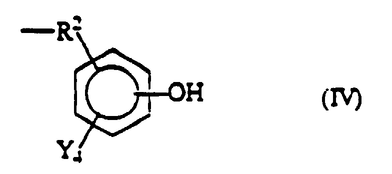 et R, R², X, Y, a, b et c ont la signification donnée, avec un halogénure cyanurique éventuellement substitué, en employant des bases.

5. Procédé de préparation des composés organosiliciés renfermant des groupes triazine selon la revendication 4, caractérisé en ce que l'on utilise, en tant que précurseur (III), des motifs de formule
B_{d}R_{3-d}SiO(SiR₂O)ₑ(SiRBO)_{f}SiR_{3-d}B_{d} (VI),
dans laquelle B, R, d, e et f ont la signification donnée ci-dessus, à condition qu'au moins un radical B soit présent par molécule polymère.

6. Procédé de préparation des composés organosiliciés renfermant des groupes triazine selon la revendication 4 ou 5, caractérisé en ce que les précurseurs (III) ou (VI) sont préparés par une réaction d'hydrosilylation avec des composés organosiliciés ayant au moins un atome d'hydrogène lié à Si par organopolysiloxane de formule
HₐR_{b}X_{c}SiO_{(4-a-b-c)/2} (VII),
dans laquelle R, X, a, b et c ont la signification donnée ci-dessus, et un composé hydroxyarylé insaturé.

7. Procédé de préparation des composés organosiliciés renfermant des groupes triazine selon la revendication 6, caractérisé en ce que l'on utilise, en tant que composés organosiliciés ayant au moins un atome d'hydrogène lié à Si par organopolysiloxane, ceux de formule
H_{d}R_{3-d}SiO(SiO₂O)ₑ (SiRHO)_{f}SiR_{3-d}H_{d} (VIII),
dans laquelle R, d, e et f ont la signification donnée ci-dessus.

8. Equilibrage des composés organosiliciés renfermant des groupes triazine selon l'une ou plusieurs des revendications 1 ou 3 ou préparés selon l'une ou plusieurs des revendications 4 à 7, caractérisé en ce que les composés organosiliciés renfermant des groupes triazine sont équilibrés avec des organopolysiloxanes choisis parmi le groupe constitué d'organopolysiloxanes linéaires renfermant des groupes triorganosiloxy terminaux, d'organopolysiloxanes linéaires renfermant des groupes hydroxyle terminaux, d'organopolysiloxanes cycliques et de copolymères à base de motifs diorganosiloxanes et monoorganosiloxanes.

9. Equilibrage des composés organosiliciés renfermant des groupes triazine selon la revendication 1, caractérisé en ce que l'on utilise, en tant qu'organopolysiloxanes linéaires renfermant des groupes triorganosiloxy terminaux, ceux de formule
R₃SiO(SiR₂O)ₘSiR₃ (X),
dans laquelle R a la signification donnée ci-dessus et m vaut 0 ou est un entier valant de 1 à 1 500, en tant qu'organopolysiloxanes linéaires renfermant des groupes hydroxyle terminaux, ceux de formule
HO(Sir₂O)ₙH (XI),
dans laquelle R a la formule donnée ci-dessus et n est un entier allant de 1 à 1 500, en tant qu'organopolysiloxanes cycliques, ceux de formule
(SiR₂O)ₒ (XII),
dans laquelle R a la signification donnée ci-dessus et o est un entier allant de 3 à 12, et en tant que copolymères, ceux à base de motif de formules
R₂SiO et RSiO_{3/2} (XIII),
dans lesquelles R a la signification donnée ci-dessus.

10. Procédé de traitement d'étoffes tissées textiles, et de cuirs, caractérisé en ce que l'on utilise des composés organosiliciés renfermant des groupes triazine selon l'une ou plusieurs des revendications 1 à 3 ou préparés selon l'une ou plusieurs des revendications 4 à 7 ou équilibrés selon les revendications 8 ou 9.
